# EUROPÄISCHE PATENTSCHRIFT

(11) **EP 2 214 942 B1**
(45) Veröffentlichungstag und Bekanntmachung des Hinweises auf die Patenterteilung: **29.06.2011**
(21) Anmeldenummer: 08853029.0
(22) Anmeldetag: 20.11.2008
(51) Int. Cl.: B60T 13/57, B60T 13/72

(54) **BREMSKRAFTVERSTÄRKER**
BRAKE SERVO UNIT
SERVOFREIN

(30) Priorität: 22.11.2007 DE 102007056523; 08.08.2008 DE 102008037048
(43) Veröffentlichungstag der Anmeldung: 11.08.2010
(73) Patentinhaber: Continental Teves AG & Co. oHG, 60488 Frankfurt (DE)
(72) Erfinder: ICKLER, Volker, 36275 Kirchheim (DE); KOLLERS, Michael, 65760 Eschborn (DE); KRÄMER, Horst, 65462 Ginsheim-Gustav (DE); KREBS, Stephan, 65760 Eschborn (DE); KÖNIG, Harald, 61239 Ober-Mörlen (DE); JAKOBI, Ralf, 65439 Flörsheim (DE); NEU, Thorsten, 65594 Runkel (DE)
(86) Internationale Anmeldenummer: PCT/EP2008/065888
(87) Internationale Veröffentlichungsnummer: WO 2009/065883

(56) Entgegenhaltungen:
- WO-A1-2006/005742
- US-A- 5 355 771

## Beschreibung

Die Erfindung betrifft einen Bremskraftverstärker für Kraftfahrzeuge mit einem Verstärkergehäuse, dessen Innenraum durch eine bewegliche Wand in eine Unterdruckkammer und eine Arbeitskammer unterteilt ist, sowie mit einem die bewegliche Wand tragenden Steuergehäuse, in dem ein Steuerventil angeordnet ist, das eine auf die bewegliche Wand einwirkende pneumatische Druckdifferenz steuert und sowohl durch eine Betätigungsstange mittels eines Ventilkolbens als auch unabhängig von der Betätigungsstange durch einen Elektromagneten betätigbar ist und aus drei konzentrisch zueinander angeordneten Dichtsitzen sowie einem mit den Dichtsitzen zusammenwirkenden, mit axialen Durchlässen versehenen Ventilkörper besteht, wobei der erste Dichtsitz im Steuergehäuse und der zweite Dichtsitz am Ventilkolben ausgebildet sind, während der dritte Dichtsitz an einer, mit dem Elektromagneten zusammenwirkenden Hülse ausgebildet ist, sowie mit einem gegenüber dem dritten Dichtsitz verschiebbar angeordnetes Ringelement, das radial innerhalb der Hülse angeordnet ist.

Ein derartiger Bremskraftverstärker ist aus der WO 2006/005742 A1 bekannt. Es hat sich jedoch herausgestellt, dass der vorbekannte Bremskraftverstärker bei einer niedrigen Bestromung des Elektromagneten und dem damit initiierten geringen Öffnungsweg des Ventilkolbens Nachteile hinsichtlich des Ansprech- und Geräuschverhaltens aufweist.

Es ist daher Aufgabe der vorliegenden Erfindung, einen Bremskraftverstärker der eingangs genannten Art derart weiterzubilden, dass die vorgenannten Nachteile vermieden werden.

Diese Aufgabe wird für einen Bremskraftverstärker der eingangs genannten Gattung durch die kennzeichnenden Merkmale des Patentanspruchs 1 gelöst.

Zur Lösung der gestellten Aufgabe ist daher vorgesehen, dass der im Bremskraftverstärker beweglich angeordnete Ventilkolben einen weiteren konzentrischen Dichtsitz aufweist, welcher den zweiten Dichtsitz in Teilbereichen axial überragt.

Die Teilbereiche, welche den zweiten Dichtsitz in axialer Richtung überragen, sorgen für eine Drosselung des Luftstromes bei geringen Öffnungswegen des Ventilkolbens, wodurch die Regelbarkeit und das Geräuschverhalten des Bremskraftverstärkers bei niedriger elektrischer Bestromung verbessert werden.

Die Erfindung wird in der nachfolgenden Beschreibung anhand mehrerer Zeichnung näher erläutert.

Es zeigen:
- Fig. 1: einen Ausschnitt eines bekannten Bremskraftverstärkers im Längsschnitt,
- Fig. 2: zeigt ausgehend von Fig. 1 einen Ausschnitt der um erfindungswesentliche Merkmale verbesserten pneumatischen Steuergruppe im Längsschnitt in der inaktiven Bereitschaftsstellung,
- Fig. 3a,b: einen Ausschnitt der pneumatische Steuergruppe gemäß Fig. 2 im Längsschnitt bei geringer Bestromung,
- Fig. 4: eine schematische Darstellung des weiteren Dichtsitzes am Ventilkolben der Steuergruppe nach Fig. 2, 3a, 3b,
- Fig. 5a,b: eine perspektivische Darstellung des Ventilkolbens für die aus Fig. 2, 3a, 3b bekannten Steuergruppe,
- Fig. 6: einen Schnitt durch die Ebene A-A des Ventilkolbens gemäß Fig. 5b,
- Fig. 7: eine Abwandlung des aus Fig. 5a, 5b, 6 bekannten Ventilkolbens im Längsschnitt, mit einem elastomeren Drosselelement, das in Verbindung mit einem Einlegeteil in den Ventilkolben eingepresst ist,
- Fig. 8: eine weitere Abwandlung des aus Fig. 5a, 5b, 6 bekannten Ventilkolbens im Längsschnitt, mit einer axial beweglich im Ventilkolben geführten Krone, welche die Funktion des weiteren Dichtsitzes in der Funktion eines Drosselelements übernimmt.

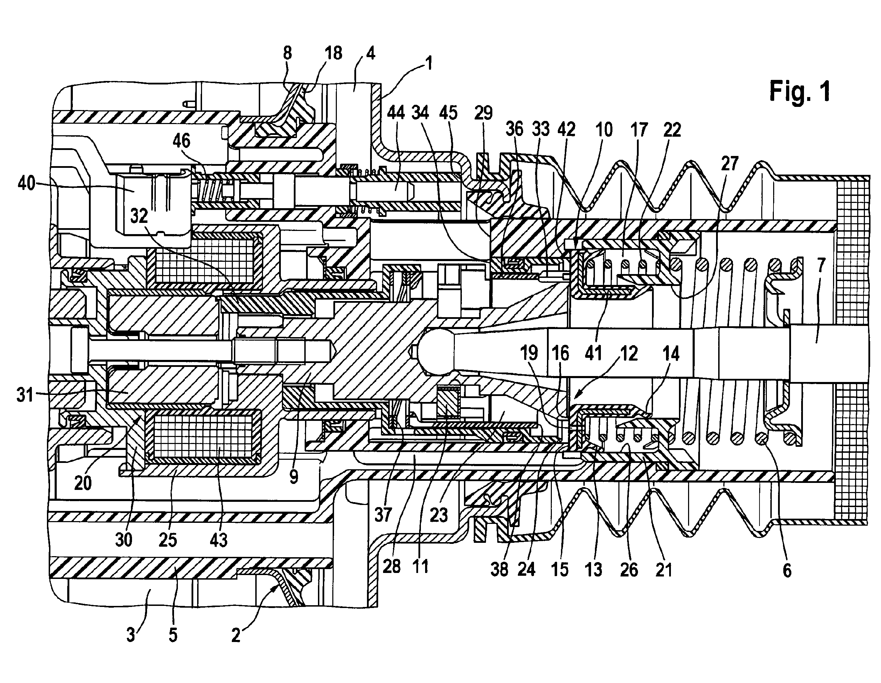

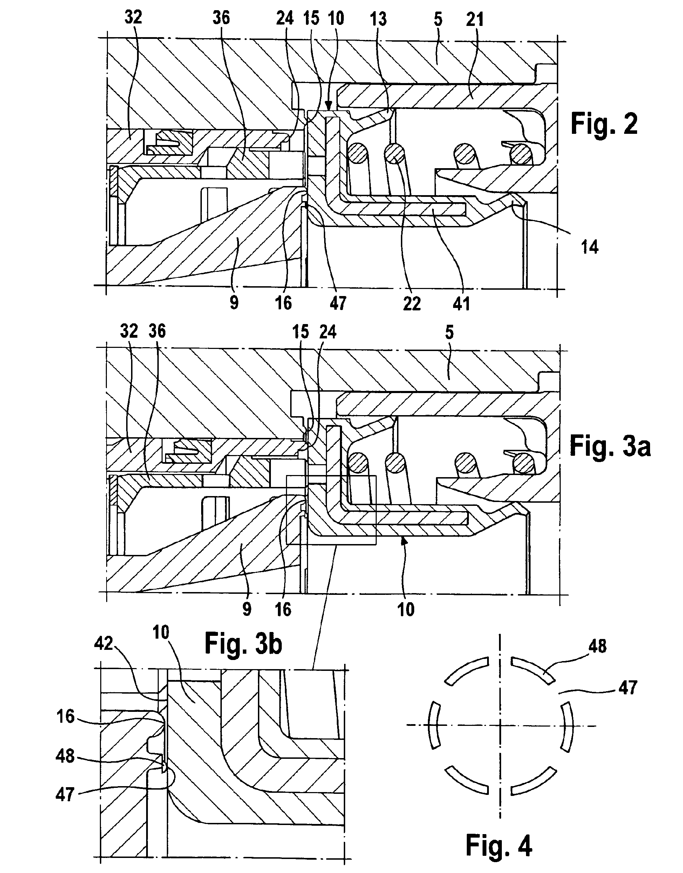

Nachfolgend wird zum besseren Verständnis der Erfindung zunächst anhand der Fig. 1 der prinzipielle Aufbau eines Bremskraftverstärkers im Längsschnitt, wie er aus der WO 2006/005742 A1 bekannt ist, erläutert, bevor auf die aus den Fig. 2-8 ersichtlichen Merkmale der Erfindung detailliert eingegangen werden, die zur Verbesserung des vorgestellten Bremskraftverstärkers beitragen.

Die Figur 1 zeigt abschnittsweise das Verstärkergehäuse 1 des bekannten Bremskraftverstärkers, das durch eine axial bewegliche Wand 2 in eine Unterdruckkammer 3 und eine Arbeitskammer 4 unterteilt ist. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem, an einem mit der Betätigungsstange 7 verbundenen Ventilkolben 9 ausgebildeten zweiten Dichtsitz 16 sowie einem mit beiden Dichtsitzen 15,16 zusammenwirkenden, in einem im Steuergehäuse 5 abgedichtet unbeweglich angeordneten Führungsteil 21 geführten, im Querschnitt L-förmig ausgebildeten Ventilkörper 10, der mittels einer, sich am Führungsteil 21 abstützenden Ventilfeder 22 gegen die Ventilsitze 15,16 gedrückt wird. Dabei weist der Ventilkörper 10 zwei koaxial ausgebildete Dichtlippen 13, 14 unterschiedlicher axialer Länge auf, die mit zwei koaxialen zylindrischen Führungsflächen 26, 27 des Führungsteiles 21 zusammenwirken. Das Führungsteil 21 begrenzt einen pneumatischen Raum 17, der über im Ventilkörper 10 ausgebildete axiale Durchlässe 19 mit dem in der Arbeitskammer 4 herrschenden pneumatischen Druck beaufschlagbar ist. Die Arbeitskammer 4 ist mit der Unterdruckkammer 3 über einen seitlich im Steuergehäuse 5 verlaufenden Kanal 28 verbindbar.

Eine in der Zeichnung nicht dargestellte Rückstellfeder, die sich an der ebenfalls nicht gezeigten unterdruckseitigen Stirnwand des Verstärkergehäuses 1 abstützt, hält die bewegliche Wand 2 in der gezeigten Ausgangsstellung. Außerdem ist eine zweite Druckfeder bzw. Kolbenstangenrückholfeder 6 vorgesehen, die einerseits indirekt an der Betätigungsstange 7 und andererseits am Führungsteil 21 abgestützt ist und deren Kraft für eine Vorspannung des Ventilkolbens 9 bzw. seines Dichtsitzes 16 gegenüber dem Ventilkörper 10 sorgt.

Um die Arbeitskammer 4 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Bremskraftverstärkers an einem im Verstärkergehäuse 1 ausgebildeten Anschlag anliegt.

Wie der Zeichnung weiter zu entnehmen ist, weist der mittels eines metallischen Versteifungsprofils 41 versteifte Ventilkörper 10 eine mit den beiden Dichtsitzen 15,16 zusammenwirkende ringförmige Dichtfläche 42 auf, die mit mehreren axialen Durchlässen 19 versehen ist. Die durch die Durchlässe 19 und Öffnungen in der Dichtfläche 42 gebildeten, näher nicht bezeichneten Strömungskanäle verbinden den pneumatischen Raum 17 mit einem durch die Dichtsitze 15,16 begrenzten Ringraum, der mit dem oben erwähnten pneumatische Kanal 29 in Verbindung steht, so dass der auf der der Dichtfläche 42 abgewandten Seite des Ventilkörpers 10 ausgebildete pneumatische Raum 17 ständig mit der Arbeitskammer 4 in Verbindung steht und am Ventilkörper 10 ein pneumatischer Druckausgleich stattfindet.

Die beschriebene Anordnung ermöglicht demnach eine Verringerung der Differenz zwischen der Ansprechkraft des Bremskraftverstärkers und der am Ventilkolben 9 wirkenden Rückstellkraft in dem Sinne, dass bei einer gleichbleibenden Ansprechkraft eine Erhöhung der Rückstellkraft oder bei einer gleichbleibenden Rückstellkraft eine Verringerung der Ansprechkraft möglich ist, wodurch eine Verbesserung der Hysterese des Bremskraftverstärkers erreicht wird.

Um eine von der Betätigungsstange 7 unabhängige Fremdbetätigung des erfindungsgemäßen Bremskraftverstärkers einzuleiten ist radial zwischen dem ersten Dichtsitz 15 und dem zweiten Dichtsitz 16 ein dritter Dichtsitz 24 vorgesehen, der mittels eines Elektromagneten 20 betätigbar ist, der vorzugsweise in einem, mit dem Ventilkolben 9 fest verbundenen Gehäuse 25 angeordnet ist und demnach zusammen mit dem Ventilkolben 9 im Steuergehäuse 5 verschiebbar ist. Der Elektromagnet 20 besteht aus einer innerhalb des Gehäuses 25 angeordneten Spule 43 sowie einem axial verschiebbar angeordneten zylindrischen Anker 31, der teilweise in einem das Gehäuse 25 verschließenden Verschlussteil 30 geführt wird und an dem sich eine Hülse 32 abstützt, in deren dem Ventilkörper 10 zugewandten Bereich der erwähnte dritte Dichtsitz 24 ausgebildet ist. In der in der Zeichnung dargestellten Ausgangslage des Ankers 31 ist der dritte Dichtsitz 24 gegenüber dem am Ventilkolben 9 ausgebildeten zweiten Dichtsitz 16 axial versetzt angeordnet, so dass zwischen dem dritten Dichtsitz 24 und der Dichtfläche 42 des Ventilkörpers 10 ein Spalt vorhanden ist. Außerdem ist ein vorzugsweise innerhalb der Hülse 32 radial geführtes Ringelement 36 vorgesehen, welches unter Zwischenschaltung eines elastischen bzw. kompressiblen Elementes 37 sich an der Hülse 32 derart abstützt, dass zwischen ihm und der Hülse 32 eine Relativbewegung möglich ist. Das elastische bzw. kompressible Element 37 ist im dargestellten Beispiel durch eine Wellfeder gebildet und ermöglicht eine regelbare Ansteuerung des Ringelements 36. Ein dem Ventilkörper 10 zugewandter Teilbereich des Ringelementes 36 wird durch radiale Durchbrüche 38 in Teilbereiche 33 unterteilt.

Um einen von der Hülse 32 bzw. dem Ringelement 36 im Steuergehäuse 5 begrenzten pneumatischen Raum 23 mit der Arbeitskammer 4 verbinden zu können, ist in den beiden genannten Teilen ein Durchbruch 34 vorgesehen. Die Anordnung der vorhin genannten Wellfeder 37 in eingebautem Zustand ist dabei vorzugsweise derart getroffen, dass sie sich, in der Betätigungsrichtung des Steuerventils 12 gesehen, hinter dem Durchbruch 34 bzw. dem vorhin erwähnten Querglied 11 befindet. Hierdurch ist die Wellfeder 37 außerhalb des direkten Luftströmungsbereiches angeordnet, wodurch positive Auswirkungen auf die Strömungsquerschnitte in Hinblick auf die Dynamik und das Geräuschverhalten des Bremskraftverstärkers erzielt werden. Außerdem weist das Ringelement 36 in seinem der Wellfeder 37 zugewandten Bereich nicht gezeigte Rastelemente bzw. -vorsprünge auf, die mit in der Hülse 32 ausgebildeten Ausnehmungen 39 derart zusammen wirken, dass das Ringelement 36 mit der Hülse 32 eine lösbare Baugruppe bildet.

Bei der in der Zeichnung gezeigten Ausführung des Bremskraftverstärkers sind schließlich elektrische Schaltmittel 40,44 vorgesehen, die insbesondere bei Bremsvorgängen wichtig sind, bei denen zusätzlich zur Fahrerbetätigung der Elektromagnet 20 angesteuert wird, um unabhängig vom Fahrerwillen eine Vollbremsung herbeizuführen (sog. Bremsassistentenfunktion). Dabei ist von besonderer Bedeutung, dass die Schaltmittel 40,44 bei jeder Bremsung betätigt werden. Gleichzeitig muss gewährleistet werden, dass der Elektromagnet 20 nach Beendigung des fremdkraftunterstützten Bremsvorganges sicher abgeschaltet wird. Die gezeigten Schaltmittel bestehen dabei aus einem vorzugsweise am Ventilkolben 9 bzw. dem Gehäuse 25 des Elektromagneten 20 befestigten, zwei Schaltstellungen aufweisenden Mikroschalter 40 sowie einem, den Mikroschalter 40 durch eine translatorische Bewegung betätigenden Betätigungselement 44, das in einer im Steuergehäuse 5 vorgesehenen Bohrung abgedichtet geführt ist und mit einem verstärkergehäusefesten Anschlag 45 zusammenwirkt, der das Bezugszeichen 45 trägt und beispielsweise durch einen radialen Kragen der hinteren Verstärkergehäusehälfte gebildet sein kann. Zwischen dem Betätigungselement 44 und dem Steuergehäuse 5 ist eine Druck-Feder 46 angeordnet, so dass das dem Mikroschalter 40 abgewandte Ende des Betätigungselements 44 unter einer Vorspannung am Anschlag 45 anliegt.

Die einzelnen Betätigungsphasen des Steuerventils 12 bei dessen Fremdbetätigung durch den Elektromagneten 20 sind grundsätzlich bekannt und werden daher nur kurz beschrieben.

In der in Fig. 1 gezeigten Ruhe- bzw. Bereitschaftsstellung des Steuerventils 12 liegt der Ventilkörper 10 sowohl am ersten Dichtsitz 15 als auch am zweiten Dichtsitz 16 an, so dass die beiden Kammern 3,4 des Bremskraftverstärkers voneinander getrennt sind und die Verbindung der Arbeitskammer 4 mit der Atmosphäre unterbrochen ist. Der dritte Dichtsitz 24 befindet sich in einem Abstand von der Dichtfläche 42 des Ventilkörpers 10 und das Ringelement 36 liegt mit seinen Teilbereichen 33 an der Dichtfläche 42 an.

Um eine Druckaufbaustellung fahrerunabhängig einzusteuern, wird der Elektromagnet 20 bestromt, so dass sowohl der dritte Dichtsitz 24 als auch das Ringelement 36 bei gleichzeitigem Zusammendrücken des elastischen Elementes 37 zunächst zur Anlage am Ventilkörper 10 kommen und anschließend den Ventilkörper 10 gegen die Kraft der Ventilfeder 22 in der Zeichnung nach rechts verschieben, so dass zwischen dem zweiten Dichtsitz 16 und dem Ventilkörper 10 ein Spalt entsteht und eine Belüftung der Arbeitskammer 4 erfolgt. Der erste Dichtsitz 15 wird dabei durch den dritten Dichtsitz 24 funktionsmäßig ersetzt.

In einer Druckhaltephase sind der zweite Dichtsitz 16 sowie der dritte Dichtsitz 24 geschlossen, so dass keine Änderungen des im Verstärkergehäuse 1 herrschenden pneumatischen Druckes auftreten können.

In einer geregelten Druckabbauphase bleibt der zweite Dichtsitz 16 geschlossen und der dritte Dichtsitz 24 hebt von der Dichtfläche 42 ab, während das Ringelement 36 mit seinen Teilbereichen 33 durch die Vorspannung des elastischen Elementes 37 an der Dichtfläche 42 anliegt, so dass über nicht gezeigte Ausnehmungen von zumindest einem Anteil der Teilbereiche 33 ein dosiertes Absaugen der Atmosphäre aus der Arbeitskammer 4 und somit ein Abbau des im Verstärkergehäuse 1 des pneumatischen Bremskraftverstärkers eingesteuerten pneumatischen Druckes erfolgt.

Aus den Fig. 2 bis 8 sind die für die Erfindung wesentlichen Merkmale zu entnehmen, die in Verbindung mit den Merkmalen des in Figur 1 vorgestellten Bremskraftverstärkers zu einem neuen, verbesserten Bremskraftverstärker führen. Die elementare Funktion und der grundsätzliche Aufbau des verbesserten Bremskraftverstärkers gleichen ansonsten dem vorstehend beschriebenen Bremskraftverstärker.

In der nachfolgenden Beschreibung der in den Fig. 2-8 offenbarten Einzelheiten wird daher lediglich auf die erfindungswesentlichen Unterschiede eingegangen.

Dabei zeigt Fig. 2 einen Ausschnitt einer pneumatischen Steuergruppe eines erfindungsgemäß verbesserten Bremskraftverstärkers im Längsschnitt in der inaktiven Bereitschaftsstellung, in welcher die beiden Dichtsitze 15 und 16 an der Dichtfläche 42 des Ventilkörpers 10 anliegen. Der Ventilkolben 9 weist erfindungsgemäß einen weiteren, tieferliegenden Dichtsitz 47 auf, welcher konzentrisch zu den anderen Dichtsitzen 15,16,24 auf einer Innenseite des zweiten Dichtsitzes 16 ausgebildet ist. In der Bereitschaftsstellung liegt auch der weitere Dichtsitz 47 am Ventilkörper 10 an.

In den Fig. 3a und 3b ist die pneumatische Steuergruppe gemäß Fig. 2 im Längsschnitt bei geringer Bestromung des Elektromagneten 20 dargestellt, um eine Druckaufbaustellung fahrerunabhängig einzusteuern, wie grundlegend bereits zu Figur 1 ausgeführt wurde. Dabei kommt der dritte Dichtsitz 24 zur Anlage am Ventilkörper 10, so dass der Ventilkörper 10 gegen die Kraft der Ventilfeder 22 in der Zeichnung nach rechts verschoben wird. Zwischen dem zweiten Dichtsitz 16 und dem Ventilkörper 10 entsteht ein Spalt und es erfolgt eine Belüftung der Arbeitskammer 4. Der erste Dichtsitz 15 wird dabei durch den dritten Dichtsitz 24 funktionsmäßig ersetzt.

Insbesondere die Fig. 3b, welche den Bereich der Dichtsitze 16 und 47 vergrößert darstellt, ist zu entnehmen, dass der weitere Dichtsitz 47 den zweiten Dichtsitz 16 axial überragt, so dass bei einem geringen Öffnungsweg des Ventilkolbens 9 der Dichtsitz 47 noch an der Dichtfläche 42 anliegt, wenn der zweite Dichtsitz 16 schon von dieser abhebt. Der Dichtsitz 47 weist wenigstens eine Ausnehmung 48, vorzugsweise jedoch mehrere am Umfang gleichmäßig verteilte Ausnehmungen 48 auf, welche in der gezeigten Stellung des Bremskraftverstärkers einen gedrosselten Luftstrom in Richtung der Arbeitskammer 4 erlauben, wodurch die Regelbarkeit und das Geräuschverhalten des Bremskraftverstärkers bei niedriger Bestromung optimiert wird.

Die Fig. 4 zeigt eine sehr stark schematisierte Darstellung des erfindungsgemäßen weiteren Dichtsitzes 47 mit einer gleichmäßigen Verteilung der Ausnehmungen 48 über den Gesamtumfang.

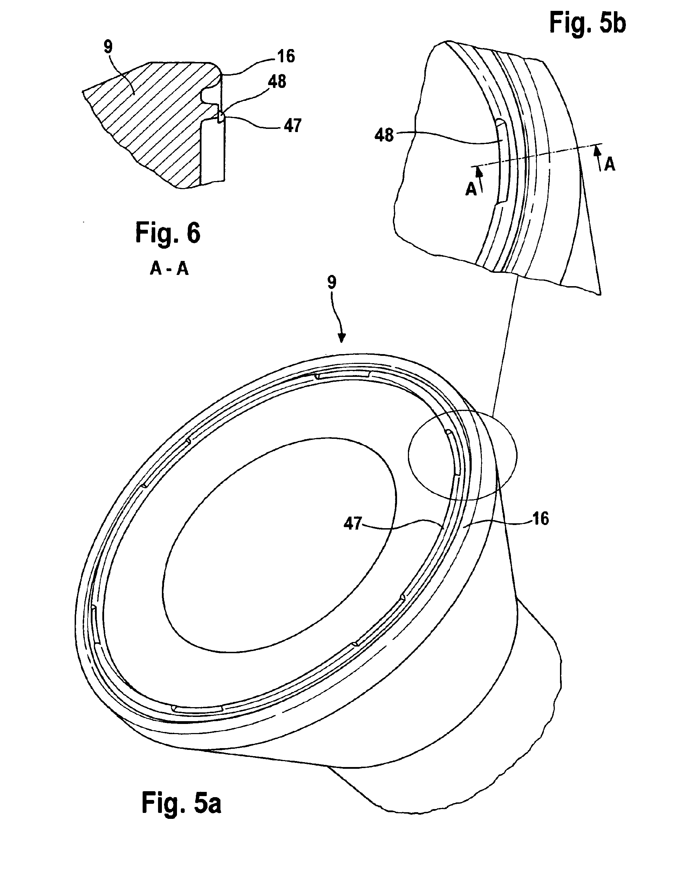

Aus den Fig. 5a und 5b ist eine perspektivische Darstellung des Ventilkolbens 9 der in Fig. 2, 3 im Längsschnitt gezeigten Steuergruppe zu entnehmen, wobei hierzu ergänzend die Fig.6 einen Schnitt durch eine Ebene A-A des Ventilkolbens 9 gemäß Fig. 5b zeigt. Hieraus geht hervor, dass der Dichtsitz 47 den zweiten Dichtsitz 16 in axialer Richtung überragt, während jedoch der zweite Dichtsitz 16 über die Ausnehmungen 48 geringfügig übersteht, um die gewünschte Dichtfunktion zu ermöglichen.

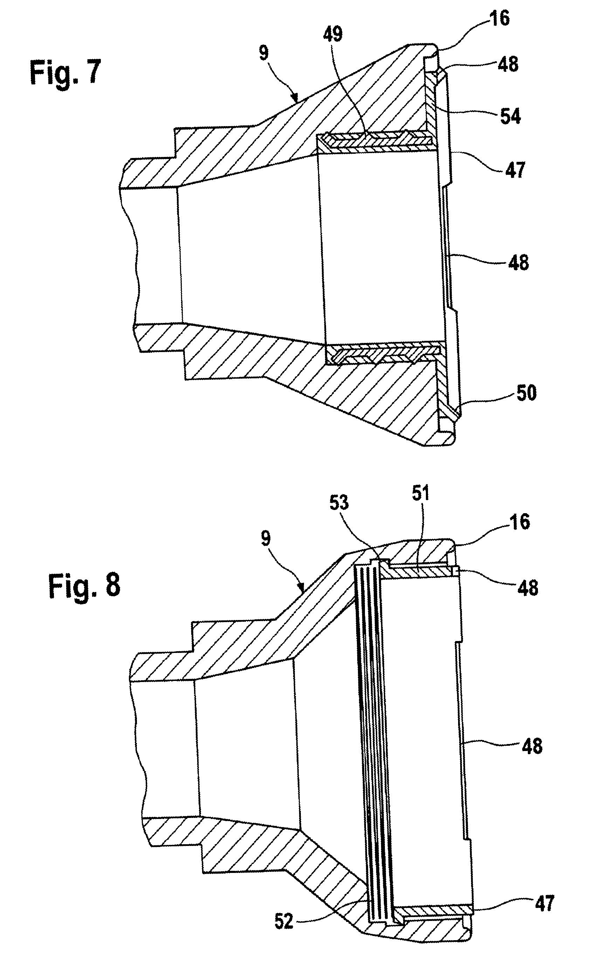

Weiterhin geht aus Fig. 7 eine Abwandlung des aus Fig. 5a, 5b, 6 bekannten weiteren konzentrischen Dichtsitzes 47 am Ventilkolben 9 im Längsschnitt hervor, wonach der weitere Dichtsitz 47 durch ein elastomeres Drosselelement 54 mit einer zirkular unterbrochenen Dichtlippe 50 gebildet ist, das als ein vorzugsweise durch Umspritzen hergestelltes Element an einem hülsenförmigen, vorzugsweise aus Stahl gefertigten Einlegeteil 49 ausgebildet ist, welches in den Ventilkolben 9 eingepresst ist. Der Dichtsitz 47 ist somit im Gegensatz zu den bisherigen Ausführungsbeispielen nicht mehr ein direkter Bestandteil des Ventilkolbens 9, sondern ein Bestandteil des in den Ventilkolben 9 eingesetzten Drosselelements 54. In der Bremslösestellung verharrt die Dichtlippe 50 innerhalb des Ventilkolbens 9, während erst in der Druckaufbaustellung die Dichtlippe 50 einen definierten gedrosselten Luftstromquerschnitt freigibt. Bezüglich des zweiten Dichtsitzes 16 gelten unverändert die bisher zu den vorangegangenen Ausführungsbeispielen gegebenen Erläuterungen.

Die Fig. 8 zeigt im Längsschnitt eine weitere Abwandlung des aus Fig. 5a, 5b, 6 bekannten weiteren Dichtsitzes 47 gleichfalls wie in Fig. 7 separat am Ventilkolben 9 angeordnet, mit einer axial beweglich im Ventilkolben 9 geführten Krone 51, welche die Funktion des weiteren Dichtsitzes 47 zur Erfüllung der Drosselfunktion übernimmt. Als Haltesicherung für die Krone 51 dienen Schnapphaken 53 am Umfang der Krone 51, die in eine Ringnut des Ventilkolbens 9 eingreifen. Die Ringnut ist derart im Ventilkolben 9 positioniert, dass ein vollständiger Hub der Krone 51 gewährleistet ist. In der Bremslösestellung befindet sich die Krone 51 entgegen der Wirkung einer zwischen der Krone 51 und dem Ventilkolben 9 angeordneten Feder 52 im Ventilkolben 9 versenkt. Erst durch die Betätigung des Ventilkolbens 9 läuft die Krone 51 nach und gibt einen definierten gedrosselten Öffnungsquerschnitt für den Luftstrom frei. Bezüglich des zweiten Dichtsitzes 16 gelten unverändert die bisher zu den vorangegangenen Ausführungsbeispielen gegebenen Erläuterungen.

Bei allen aus den Fig. 2-8 ersichtlichen Ausführungsbeispielen wirkt somit jeweils der weitere konzentrische Dichtsitz 47 quasi als Vorventil mit einem reduziertem Querschnitt zur Drosselung des eingebrachten Luftvolumenstroms, woraus eine feinfühlige Regelbarkeit im unteren Druckbereich und ein verbessertes Geräuschverhalten resultieren.

### Bezugszeichenliste

- 1: Verstärkergehäuse
- 2: bewegliche Wand
- 3: Unterdruckkammer
- 4: Arbeitskammer
- 5: Steuergehäuse
- 6: Kolbenstangenrückholfeder
- 7: Betätigungsstange
- 8: Membranteller
- 9: Ventilkolben
- 10: Ventilkörper
- 11: Querglied
- 12: Steuerventil
- 13: Dichtlippe
- 14: Dichtlippe
- 15: Dichtsitz
- 16: Dichtsitz
- 17: Raum
- 18: Rollmembran
- 19: Durchlass
- 20: Elektromagnet
- 21: Führungsteil
- 22: Ventilfeder
- 23: Raum
- 24: Dichtsitz
- 25: Gehäuse
- 26: Führungsfläche
- 27: Führungsfläche
- 28: Kanal
- 29: Kanal
- 30: Verschlussteil
- 31: Anker
- 32: Hülse
- 33: Teilbereich
- 34: Durchbruch
- 35: -
- 36: Ringelement
- 37: Element
- 38: Durchbruch
- 39: Ausnehmung
- 40: Mikroschalter
- 41: Versteifungsprofil
- 42: Dichtfläche
- 43: Spule
- 44: Betätigungselement
- 45: Anschlag
- 46: Feder
- 47: Dichtsitz
- 48: Ausnehmung
- 49: Einlegeteil
- 50: Dichtlippe
- 51: Krone
- 52: Feder
- 53: Schnapphaken
- 54: Drosselelement

## Patentansprüche

1. Bremskraftverstärker für Kraftfahrzeuge mit einem Verstärkergehäuse (1), dessen Innenraum durch eine bewegliche Wand (2) in eine Unterdruckkammer (3) und eine Arbeitskammer (4) unterteilt ist, sowie mit einem die bewegliche Wand (2) tragenden Steuergehäuse (5), in dem ein Steuerventil (12) angeordnet ist, das eine auf die bewegliche Wand (2) einwirkende pneumatische Druckdifferenz steuert und sowohl durch eine Betätigungsstange (7) mittels eines Ventilkolbens (9) als auch unabhängig von der Betätigungsstange (7) durch einen Elektromagneten (20) betätigbar ist und aus drei konzentrisch zueinander angeordneten Dichtsitzen (15, 16, 24) sowie einem mit den Dichtsitzen (15, 16, 24) zusammenwirkenden Ventilkörper (10) besteht, wobei der erste Dichtsitz (15) im Steuergehäuse (5) und der zweite Dichtsitz (16) am Ventilkolben (9) ausgebildet sind, während der dritte Dichtsitz (24) an einer, mit dem Elektromagneten (20) zusammenwirkenden Hülse (32) ausgebildet ist, sowie mit einem gegenüber dem dritten Dichtsitz (24) verschiebbar angeordnetes Ringelement (36), das radial innerhalb der Hülse (32) angeordnet ist, **dadurch gekennzeichnet, dass** der Ventilkolben (9) einen weiteren konzentrischen Dichtsitz (47) aufweist, welcher den zweiten Dichtsitz (16) axial überragt, wobei der weitere Dichtsitz (47) wenigstens eine Ausnehmung (48) aufweist.

2. Bremskraftverstärker nach Anspruch 1, **dadurch gekennzeichnet, dass** mehrere Ausnehmungen (48) gleichmäßig am Umfang des weiteren Dichtsitzes (47) verteilt vorgesehen sind.

3. Bremskraftverstärker nach Anspruch 1 oder 2, **dadurch gekennzeichnet, dass** der zweite Dichtsitz (16) den Bereich der Ausnehmung (48) axial überragt.

4. Bremskraftverstärker nach Anspruch 1, **dadurch gekennzeichnet, dass** der weitere Dichtsitz (47) ein Bestandteil eines Drosselelements (54) ist, das mit einem vorzugsweise aus Stahl hergestellten Einlegeteil (49) verbunden ist und im Hohlraum des Ventilkolbens (9) vorzugsweise mittels einer Presspassung fixiert ist.

5. Bremskraftverstärker nach Anspruch 4, **dadurch gekennzeichnet, dass** das Drosselelement (54) durch ein Umspritzen des Einlegeteils (49) mit einem Elastomere hergestellt ist.

6. Bremskraftverstärker nach einem der vorangegangenen Ansprüche, **dadurch gekennzeichnet, dass** der weitere Dichtsitz (47) als eine durch mehrere Ausnehmungen (48) unterbrochene Dichtlippe (50) ausgebildet ist.

7. Bremskraftverstärker nach Anspruch 1, **dadurch gekennzeichnet, dass** der weitere Dichtsitz (47) die Kontur einer Krone (51) aufweist, die axial beweglich im Ventilkolben (9) aufgenommen ist.

8. Bremskraftverstärker nach Anspruch 7, **dadurch gekennzeichnet, dass** die Krone (51) eine Haltesicherung aufweist, wozu an der Krone (51) Schnapphaken (53) angeordnet sind, die in eine Ringnut des Ventilkolbens (9) eingreifen.

9. Bremskraftverstärker nach Anspruch 7, **dadurch gekennzeichnet, dass** zur Grundpositionierung des weiteren Dichtelements (47) am Ventilkolben (9) eine Feder (52) vorgesehen ist, die in einem Hohlraum des Ventilkolbens (9) zwischen der Krone (51) und einem Innenabsatz des Ventilkolbens (9) angeordnet ist.

10. Bremskraftverstärker nach Anspruch 9, **dadurch gekennzeichnet, dass** die Feder (52) als Wellenfeder ausgeführt ist.

## Claims

1. Brake servo for motor vehicles, having a servo housing (1), the interior space of which is divided by a movable wall (2) into a vacuum chamber (3) and a working chamber (4), and also having a control housing (5) which bears the movable wall (2) and in which is arranged a control valve (12) which controls a pneumatic pressure difference acting on the movable wall (2) and which can be actuated both by an actuating rod (7) via a valve piston (9) and also, independently of the actuating rod (7), by an electromagnet (20) and which is composed of three sealing seats (15, 16, 24) arranged concentrically with respect to one another and of a valve body (10) which interacts with the sealing seats (15, 16, 24), with the first sealing seat (15) being formed in the control housing (5) and with the second sealing seat (16) being formed on the valve piston (9), while the third sealing seat (24) is formed on a sleeve (32) which interacts with the electromagnet (20), and also having an annular element (36) which is arranged so as to be movable relative to the third sealing seat (24) and which is arranged radially within the sleeve (32), **characterized in that** the valve piston (9) has a further concentric sealing seat (47) which projects axially beyond the second sealing seat (16), with the further sealing seat (47) having at least one recess (48).

2. Brake servo according to Claim 1, **characterized in that** a plurality of recesses (48) are provided so as to be distributed uniformly over the circumference of the further sealing seat (47).

3. Brake servo according to Claim 1 or 2, **characterized in that** the second sealing seat (16) projects axially beyond the region of the recess (48).

4. Brake servo according to Claim 1, **characterized in that** the further sealing seat (47) is a constituent part of a throttle element (54) which is connected to an insert part (49) preferably produced from steel and which is fixed in the cavity of the valve piston (9) preferably by means of an interference fit.

5. Brake servo according to Claim 4, **characterized in that** the throttle element (54) is produced by means of the extrusion coating of the insert part (49) with an elastomer.

6. Brake servo according to one of the preceding claims, **characterized in that** the further sealing seat (47) is formed as a sealing lip (50) which is interrupted by a plurality of recesses (48).

7. Brake servo according to Claim 1, **characterized in that** the further sealing seat (47) has the contour of a crown (51) which is held in an axially movable manner in the valve piston (9).

8. Brake servo according to Claim 7, **characterized in that** the crown (51) has a retention facility, for which purpose snap-in hooks (53) are arranged on the crown (51), which snap-in hooks (53) engage into an annular groove of the valve piston (9).

9. Brake servo according to Claim 7, **characterized in that**, for the basic positioning of the further sealing element (47) on the valve piston (9), a spring (52) is provided which is arranged in a cavity of the valve piston (9) between the crown (51) and an inner shoulder of the valve piston (9).

10. Brake servo according to Claim 9, **characterized in that** the spring (52) is designed as a corrugated spring.

## Revendications

1. Servofrein pour véhicules automobiles, comprenant un boîtier de servofrein (1), dont l'espace interne est divisé par une paroi mobile (2) en une chambre de dépression (3) et une chambre de travail (4), et comprenant également un boîtier de commande (5) portant la paroi mobile (2), dans lequel est disposée une soupape de commande (12) qui commande une différence de pression pneumatique agissant sur la paroi mobile (2) et qui peut être actionnée à la fois par une tige d'actionnement (7) au moyen d'un piston de soupape (9) et aussi indépendamment de la tige d'actionnement (7) par un électroaimant (20), et qui se compose de trois sièges d'étanchéité (15, 16, 24) disposés concentriquement les uns par rapport aux autres ainsi que d'un corps de soupape (10) coopérant avec les sièges d'étanchéité (15, 16, 24), le premier siège d'étanchéité (15) étant réalisé dans le boîtier de commande (5) et le deuxième siège d'étanchéité (16) étant réalisé sur le piston de soupape (9), tandis que le troisième siège d'étanchéité (24) est réalisé sur un manchon (32) coopérant avec l'électroaimant (20), et comprenant aussi un élément annulaire (36) disposé de manière déplaçable par rapport au troisième siège d'étanchéité (24), lequel élément annulaire est disposé radialement à l'intérieur du manchon (32), **caractérisé en ce que** le piston de soupape (9) présente un autre siège d'étanchéité concentrique (47), qui dépasse axialement du deuxième siège d'étanchéité (16), l'autre siège d'étanchéité (47) présentant au moins un évidement (48).

2. Servofrein selon la revendication 1, **caractérisé en ce que** plusieurs évidements (48) sont répartis uniformément sur la périphérie de l'autre siège d'étanchéité (47).

3. Servofrein selon la revendication 1 ou 2, **caractérisé en ce que** le deuxième siège d'étanchéité (16) dépasse axialement au-delà de la région de l'évidement (48).

4. Servofrein selon la revendication 1, **caractérisé en ce que** l'autre siège d'étanchéité (47) est un constituant d'un élément d'étranglement (54), qui est connecté à une partie d'insertion (49) de préférence fabriquée en acier, et qui est fixé dans la cavité du piston de soupape (9) de préférence au moyen d'un ajustement serré.

5. Servofrein selon la revendication 4, **caractérisé en ce que** l'élément d'étranglement (54) est fabriqué par surmoulage de la partie d'insertion (49) avec un élastomère.

6. Servofrein selon l'une quelconque des revendications précédentes, **caractérisé en ce que** l'autre siège d'étanchéité (47) est réalisé sous forme de lèvre d'étanchéité (50) interrompue par plusieurs évidements (48).

7. Servofrein selon la revendication 1, **caractérisé en ce que** l'autre siège d'étanchéité (47) présente le contour d'une couronne (51) qui est reçue de manière axialement déplaçable dans le piston de soupape (9).

8. Servofrein selon la revendication 7, **caractérisé en ce que** la couronne (51) présente une fixation de maintien **en ce que** des crochets d'encliquetage (53) sont disposés sur la couronne (51) et viennent en prise dans une rainure annulaire du piston de soupape (9).

9. Servofrein selon la revendication 7, **caractérisé en ce que** pour le positionnement de base de l'autre élément d'étanchéité (47) sur le piston de soupape (9), il est prévu un ressort (52) qui est disposé dans une cavité du piston de soupape (9) entre la couronne (51) et un retrait intérieur du piston de soupape (9).

10. Servofrein selon la revendication 9, **caractérisé en ce que** le ressort (52) est réalisé sous forme de ressort ondulé.
